# EUROPEAN PATENT APPLICATION

(11) **EP 2 706 090 A1**
(43) Date of publication of application: **12.03.2014**
(21) Application number: 13165690.2
(22) Date of filing: 29.04.2013
(51) Int. Cl.: C08K 5/523, C08K 5/5399, C08K 9/04, C08L 55/02, C08L 67/04, C08L 69/00

(54) **Resin composition and resin molded article**

(30) Priority: 11.09.2012 JP 2012199499
(71) Applicant: Fuji Xerox Co., Ltd., Minato-ku, Tokyo (JP)
(72) Inventor: Ikuno, Masaya, Ebina-shi, Kanagawa (JP); Kojima, Hiroshi, Ebina-shi, Kanagawa (JP); Imada, Akira, Ebina-shi, Kanagawa (JP)
(74) Representative: Ward, James Norman

(57) **Abstract**

There is provided a resin composition containing: a polycarbonate resin; an acrylonitrile/butadiene/styrene resin, a polylactic acid resin, at least one flame retardant selected from a condensed phosphate and a phosphazene compound, and talc modified with an acid; and provided a resin molded article containing: a polycarbonate resin; an acrylonitrile/butadiene/styrene resin; a polylactic acid resin; at least one flame retardant selected from a condensed phosphate and a phosphazene compound; and talc modified with an acid.

## Description

### BACKGROUND

### 1. Field

The present invention relates to a resin composition and a resin molded article.

### 2. Description of the Related Art

A variety of resin compositions have hitherto been provided and used for various applications. In particular, resin compositions are used for various parts of household electrical appliances and automobiles, housings, and the like. Resin compositions are also used for parts of housings of office equipment and electronic and electrical equipment, and the like.

For example, JP-A-2007-246845 (the term "JP-A" as used herein means an "unexamined published Japanese patent application") proposes a resin composition comprising a blend of (A) from 95 to 5 % by weight of a thermoplastic polyester resin and (B) from 5 to 95 % by weight of another thermoplastic resin relative to a total sum of the component (A) and the component (B) and having, in a dispersed structure of the component (A) and the component (B), a phase structure containing 5 % or more of the component (B) in the component (A) and/or a phase structure containing 5 % or more of the component (A) in the component (B).

In addition, JP-A-2008-156616 proposes a resin composition comprising a blend of (A) 100 parts by weight of a polylactic acid resin and (B) from 0.05 to 30 parts by weight of an aromatic ring-containing phosphonic acid metal salt, the resin composition being further blended with at least one member selected among (C) a crystallization accelerator, (D) a thermoplastic resin other than the polylactic acid resin, (E) a filler, (F) a stabilizer, (G) a release agent, and (H) a reactive end-capping agent.

In addition, JP-A-2011-74327 proposes an injection molding material for automobile interior parts containing a highly crystalline polylactic acid based resin containing polylactic acid, a plasticizer, and a crystal nucleating agent, a polyolefin, and a compatibilizer.

### SUMMARY

An object of the invention is to provide a resin composition capable of enhancing heat resistance without impairing flame retardancy in terms of the resulting resin molded article.

The foregoing problem is solved by the following means.
[1] A resin composition containing:
   a polycarbonate resin,
   an acrylonitrile/butadiene/styrene resin,
   a polylactic acid resin,
   at least one flame retardant selected from a condensed phosphate and a phosphazene compound, and
   talc modified with an acid.
[2] The resin composition according to [1],
   wherein a weight ratio of the flame retardant to the talc is in the range of from 10/1 to 1/3.
[3] The resin composition according to [1],
   wherein a weight ratio of the acrylonitrile/butadiene/styrene resin to the polylactic acid resin is in the range of from 1/3 to 4/1.
[4] The resin composition according to [1],
   wherein the polycarbonate resin is contained in an amount of 50 % by mass or more and 80 % by mass or less,
   the acrylonitrile/butadiene/styrene resin is contained in an amount of 10 % by mass or more and 30 % by mass or less, and
   the polylactic acid resin is contained in an amount of 10 % by mass or more and 40 % by mass or less,
   in the whole amount of the polycarbonate resin, the acrylonitrile/butadiene/styrene resin, and the polylactic acid resin; and
   the flame retardant is contained in an amount of 5 % by mass or more and 40 % by mass or less, and
   the talc is contained in an amount of 1 % by mass or more and 20 % by mass or less,
   relative to the whole amount of the polycarbonate resin, the acrylonitrile/butadiene/styrene resin, and the polylactic acid resin.
[5] The resin composition according to [1],
   wherein a weight average molecular weight of the polycarbonate resin is in the range of from 5,000 to 30,000.
[6] The resin composition according to [4],
   wherein the polycarbonate resin is contained in an amount of 55 % by mass or more and 75 % by mass or less.
[7] The resin composition according to [1],
   wherein a mass ratio of the components of the acrylonitrile/butadiene/styrene resin is in the range of from 20/5/40 to 30/40/70.
[8] The resin composition according to [4],
   wherein the flame retardant is contained in an amount of from 10 % by mass to 20 % by mass.
[9] A resin molded article containing:
   a polycarbonate resin,
   an acrylonitrile/butadiene/styrene resin,
   a polylactic acid resin which is crystallized,
   at least one flame retardant selected from a condensed phosphate and a phosphazene compound, and
   talc modified with an acid.
[10] The resin molded article according to [9],
   wherein a weight ratio of the flame retardant to the talc is in the range of from 10/1 to 1/3.
[11] The resin molded article according to [9],
   wherein a weight ratio of the acrylonitrile/butadiene/styrene resin to the polylactic acid resin is in the range of from 1/3 to 4/1.
[12] The resin molded article according to [9],
   wherein the polycarbonate resin is contained in an amount of 50 % by mass or more and 80 % by mass or less,
   the acrylonitrile/butadiene/styrene resin is contained in an amount of 10 % by mass or more and 30 % by mass or less, and
   the polylactic acid resin is contained in an amount of 10 % by mass or more and 40 % by mass or less,
   in the whole amount of the polycarbonate resin, the acrylonitrile/butadiene/styrene resin, and the polylactic acid resin; and
   the flame retardant is contained in an amount of 5 % by mass or more and 40 % by mass or less, and
   the talc is contained in an amount of 1 % by mass or more and 20 % by mass or less,
   relative to the whole amount of the polycarbonate resin, the acrylonitrile/butadiene/styrene resin, and the polylactic acid resin.
[13] The resin molded article according to [9],
   wherein a weight average molecular weight of the polycarbonate resin is in the range of from 5,000 to 30,000.
[14] The resin molded article according to [12],
   wherein the polycarbonate resin is contained in an amount of 55 % by mass or more and 75 % by mass or less.
[15] The resin molded article according to [9],
   wherein a mass ratio of the components of the acrylonitrile/butadiene/styrene resin is in the range of from 20/5/40 to 30/40/70.
[16] The resin molded article according to [12],
   wherein the flame retardant is contained in an amount of from 10 % by mass to 20 % by mass.

In accordance with the aspect of [1] to [8] above, in a system containing a polycarbonate resin, an acrylonitrile/butadiene/styrene resin, and a polylactic acid resin, it is possible to provide a resin composition capable of enhancing heat resistance without impairing flame retardancy in terms of the resulting resin molded article, as compared with the case of not containing the foregoing specified flame retardant and talc.

In accordance with the aspect of [9] to [16] above, in a system containing a polycarbonate resin, an acrylonitrile/butadiene/styrene resin, and a polylactic acid resin, it is possible to provide a resin molded article having enhanced heat resistance without impairing flame retardancy, as compared with the case of not containing the foregoing specified flame retardant and talc.

### DETAILED DESCRIPTION

An embodiment that is an example of the invention is hereunder described.

### [Resin composition]

The resin composition according to the present embodiment is constituted to include a polycarbonate resin (hereinafter referred to as "PC resin"), an acrylonitrile/butadiene/styrene resin (hereafter referred to as "ABS resin"), a polylactic acid resin (hereinafter referred to as "PLA resin"), at least one flame retardant selected from a condensed phosphate and a phosphazene compound (hereinafter referred to as "specified flame retardant"), and talc modified with an acid (hereinafter referred to as "acid-modified talc").

Here, it has hitherto been known that a resin composition obtained by mixing a PLA resin and other petroleum-derived resin is used as a raw material of a resin molded article, while taking into consideration environmental properties. For such a resin composition, it is required to impart flame retardancy as well as heat resistance to the resulting resin molded article.

However, in order to obtain the flame retardancy, a flame retardant is needed. As a result of adding the flame retardant, there is a concern that the heat resistance is lowered, in particular, when a high load is applied, the heat resistance is lowered.

In addition, there has also been known a technology in which the PLA resin is crystallized with a crystal nucleating agent, thereby enhancing the heat resistance. However, it is the present state that sufficient heat resistance is not obtained together with flame retardancy.

On the other hand, as for the resin composition according to the present embodiment, when the mixed resin containing the PC resin, the ABS resin, and th PLA resin is blended with the specified flame retardant and the acid-modified talc, a resin composition capable of enhancing heat resistance without impairing flame retardancy in terms of the resulting resin molded article is realized.

Though reasons for this are not always elucidated yet, the following reasons may be considered.

First of all, it may be considered that in the above-described mixed resin, excellent flame retardancy is imparted upon being blended with the specified flame retardant. On the other hand, the specified flame retardant also functions as a plasticizer, and in general, its heat resistance tends to be lowered.

However, it may be considered that by blending the acid-modified talc together with the specified flame retardant in such a way, a lowering of the heat resistance is suppressed even in a state where the PLA resin is crystallized.

As reasons for this, it may be considered that a crystal structure of the PLA resin by the acid-modified talc has a high elastic modulus.

In addition to that, it may be considered that an AS resin component (acrylonitrile/styrene resin) in the ABS resin and the PLA resin are easily compatibilized with each other, dispersibility of the acid-modified talc per se is enhanced upon being modified with an acid, and both the PLA resin and the acid-modified talc are blended in a highly dispersed state in the resin composition. Namely, it may be considered that the crystal structure of the PLA resin by the acid-modified talc is present in a highly dispersed state in the resin composition.

Accordingly, it may be considered that excellent heat resistance is imparted by the acid-modified talc. Incidentally, non-acid-modified talc is difficult to realize high dispersibility. In addition, since the surface exhibits alkalinity, decomposition of the PLA resin is accelerated.

It may be considered from the foregoing that the resin composition according to the present embodiment is able to obtain a resin molded article having enhanced heat resistance without impairing flame retardancy.

Incidentally, the PLA resin is a plant-derived resin, and a reduction of the environmental load (specifically, a reduction of the CO₂ discharge amount or a reduction of the use amount of petroleum) is realized.

On the other hand, the PC resin and the ABS resin also have a function to hold the strength in terms of the resulting resin molded article. However, as for a mixed resin of the PC resin and the ABS resin, a recycled material having such a history that it is molded two or more times may be utilized. In that case, a reduction of the environmental load (specifically, a reduction of the CO₂ discharge amount or a reduction of the use amount of petroleum) is more effectively realized.

Each of the components is hereunder described in detail.

### (Resins)

### - PC resin -

The PC resin is not particularly limited, and examples thereof include those having (-O-R-OCO-) as a repeating unit. Incidentally, examples of R include diphenylpropane and p-xylene. -O-R-O is not particularly limited so far as it is a dioxy compound.

Specific examples of the PC resin include aromatic polycarbonates such as bisphenol A type polycarbonate, bisphenol S type polycarbonate, and biphenyl type polycarbonate.

The PC resin may also be a copolymer with silicone or undeca acid amide.

A weight average molecular weight of the PC resin is, for example, 5,000 or more and 30,000 or less, and desirably 10,000 or more and 25,000 or less.

When the weight average molecular weight of the PC resin is too low, there is a concern that its fluidity becomes excessive, so that processability is lowered. On the other hand, when the weight average molecular weight of the PC resin is too high, there is a concern that its fluidity is insufficient, so that processability is lowered.

Incidentally, the weight average molecular weight is measured using a gel permeation chromatograph (GPC). The molecular weight measurement by GPC is carried out in a chloroform solvent using, as a measuring apparatus, HLC-8320 GPC, manufactured by Tosoh Corporation and using, as a column, TSKgel GMHHR-M + TSKgel GMHHR-M (7.8 mm, I.D.: 30 cm), manufactured by Tosoh Corporation. The weight average molecular weight is calculated from this measurement result by using a molecular weight calibration curve prepared by a monodispersed polystyrene standard sample. The measurement of the weight average molecular weight is hereinafter the same.

The PC resin is contained in an amount of 50 % by mass or more and 80 % by mass or less (desirably 55 % by mass or more and 75 % by mass or less, and more desirably 60 % by mass or more and 70 % by mass or less) in the whole amount of the PC resin, the ABS resin, and the PLA resin.

So far as the content of the PC resin falls within the foregoing range, the resulting resin molded article is excellent in terms of heat resistance.

### - ABS resin -

The ABS resin is not particularly limited, and examples thereof include resins having a component ratio thereof (acrylonitrile/butadiene/styrene) of from 20/5/40 to 30/40/70 in terms of a mass ratio.

Incidentally, the ABS resin may be not only a copolymer but a resin prepared by the polymer blending method.

Moreover, in the ABS resin, a mass ratio of acrylonitrile and styrene to butadiene is preperably in the range of from 50/50 to 95/5, more preferably in the range of from 60/40 to 90/10.

A weight average molecular weight of the ABS resin is, for example, 1,000 or more and 100,000 or less and desirably 5,000 or more and 50,000 or less.

When the weight average molecular weight of the ABS resin is too low, there is a concern that its fluidity becomes excessive, so that processability is lowered. On the other hand, when the weight average molecular weight of the ABS resin is too high, there is a concern that its fluidity is insufficient, so that processability is lowered.

The ABS resin is preferably contained in an amount of 10 % by mass or more and 30 % by mass or less (desirably 10 % by mass or more and 25 % by mass or less, and more desirably 10 % by mass or more and 20 % by mass or less) in the whole amount of the PC resin, the ABS resin, and the PLA resin.

So far as the content of the ABS resin falls within the foregoing range, the resulting resin molded article is excellent in terms of impact resistance and heat resistance.

### - PLA resin -

The PLA resin is not particularly limited so far as it is a condensate of lactic acid. So far as at least a carboxyl group is present in a terminal of a polymer chain (namely, a terminal of the main chain), the PLA resin may be an L-form or a D-form, or a mixture thereof (for example, a stereo complex obtained by mixing a poly-L-lactic acid resin and a poly-D-lactic acid resin, or a polylactic acid resin containing both an L-lactic acid block and a D-lactic acid block in a structure thereof).

As the PLA resin, synthetic products may be used, or commercially available products may be used. Examples of the commercially available products include TERRAMAC TE4000, TERRAMAC TE7000, and TERRAMAC TE8000, all of which are manufactured by Unitika Ltd.; and LACEA H100, manufactured by Mitsui Chemicals, Inc.

The PLA resin may be used either alone or in combination of two or more kinds thereof.

Incidentally, the PLA resin may also be a copolymer of a lactic acid monomer and other monomer. As for copolymerizable other monomer, examples of dicarboxylic acids include malonic acid, succinic acid, glutaric acid, adipic acid, pimelic acid, azelaic acid, sebacic acid, fumaric acid, 2,2-dimethylglutaric acid, suberic acid, 1,3-cyclopentanedicarboxylic acid, 1,4-dicyclohexanedicarboxylic acid, 1,3-cyclohexanedicarboxylic acid, diglycolic acid, itaconic acid, maleic aid, 2,5-norbornanedicarboxylic acid, and ester-forming derivatives thereof. In addition, examples of diols include ethylene glycol, diethylene glycol, propylene glycol, 1,3-propanediol, 2,2-dimethyl-l,3-propanediol, 1,3-butanediol, 1,4-butanediol, 1,5-pentanediol, 1,6-hexanediol, 2,2-trimethyl-1,6-hexanediol, thiodiethanol, 1,3-cyclohexanedimethanol, 1,4-cyclohexanedimethanol, 2,2,4,4-tetramethyl-1,3-cyclobutanediol, triethylene glycol, tetraethylene glycol, and di-, tri- or tetrapropylene glycol. Other monomer may be used either alone or in combination of two or more kinds thereof.

A weight average molecular weight of the PLA resin is, for example, 30,000 or more and 200,000 or less, and desirably 50,000 or more and 150,000 or less.

The PLA resin is preferably contained in an amount of 10 % by mass or more and 40 % by mass or less (desirably 15 % by mass or more and 35 % by mass or less, and more desirably 20 % by mass or more and 30 % by mass or less) in the whole amount of the PC resin, the ABS resin, and the PLA resin.

So far as the content of the PLA resin falls within the foregoing range, the resulting resin molded article is excellent in terms of heat resistance.

It is preferable that a total sum of the PC resin and the ABS resin is 60 % by mass or more and 90 % by mass or less (desirably 60 % by mass or more and 85 % by mass or less) in the whole amount of the PC resin, the ABS resin, and the PLA resin. So far as the total content of the PC resin and the ABS resin falls within the foregoing range, the resulting resin molded article is excellent in terms of heat resistance.

Moreover, a weight ratio of the acrylonitrile/butadiene/styrene resin (ABS resin) to the polylactic acid resin is preferably in the range of from 1/3 to 4/1. (In this specification, mass ratio is equal to weight ratio.)

### (Other resins)

If desired, the resin composition according to the present embodiment may contain other general resin so far as the effects are not impaired.

### (Specified flame retardant)

The specified flame retardant is at least one flame retardant selected from a condensed phosphate and a phosphazene compound.

### ● Condensed phosphate:

Examples of the condensed phosphate include aromatic condensed phosphates such as bisphenol A types, biphenylene types, and isophthalic types. Specifically, examples thereof include condensed phosphates represented by the following general formula (I) or (II).

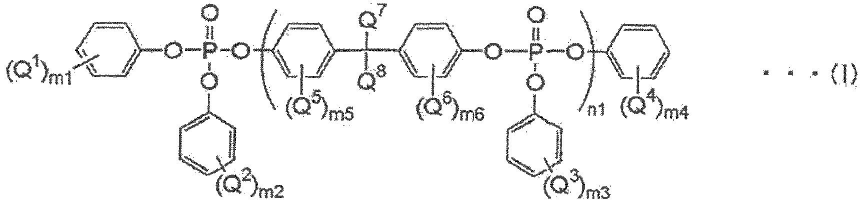

In the general formula (I), each of Q¹, Q², Q³, and Q⁴ independently represents an alkyl group having a carbon number of 1 or more and 6 or less; each of Q⁵ and Q⁶ independently represents a methyl group; Q⁷, and Q⁸ independently represents a hydrogen atom or a methyl group; each of m1, m2, m3, and m4 independently represents an integer of 0 or more and 3 or less; each of m5 and m6 independently represents an integer of 0 or more and 2 or less; and n1 represents an integer of 0 or more and 10 or less.

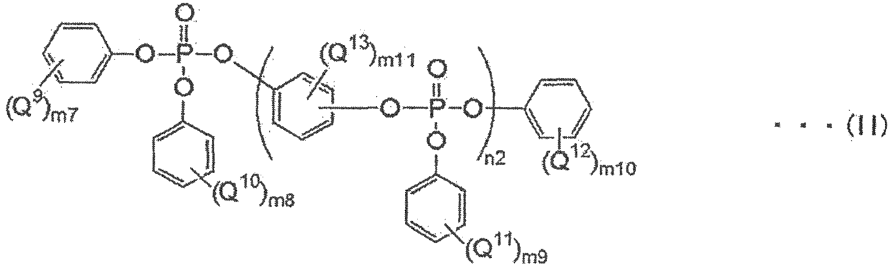

In the general formula (II), each of Q⁹, Q¹⁰, Q¹¹, and Q¹² independently represents an alkyl group having a carbon number of 1 or more and 6 or less; Q¹³ represents a methyl group; each of m7, m8, m9, and m10 independently represents an integer of 0 or more and 3 or less; m11 represents an integer of 0 or more and 4 or less; and n2 represents an integer of 0 or more and 10 or less.

The condensed phosphate may be either a synthetic product or a commercially available product. Specifically, examples of commercially available products of the condensed phosphate include commercially available products of Daihachi Chemical Industry Co., Ltd. (for example, PX200, PX201, PX202, CR741, etc.); and commercially available products of Adeka Corporation (for example, ADK STAB FP2100, ADK STAB FP2200, etc.).

Of these, the condensed phosphate is desirably at least one member selected from a compound represented by the following structural formula (1) (for example, PX200, manufactured by Daihachi Chemical Industry Co., Ltd.) and a compound represented by the following structure formula (2) (for example, CR741, manufactured by Daihachi Chemical Industry Co., Ltd.).

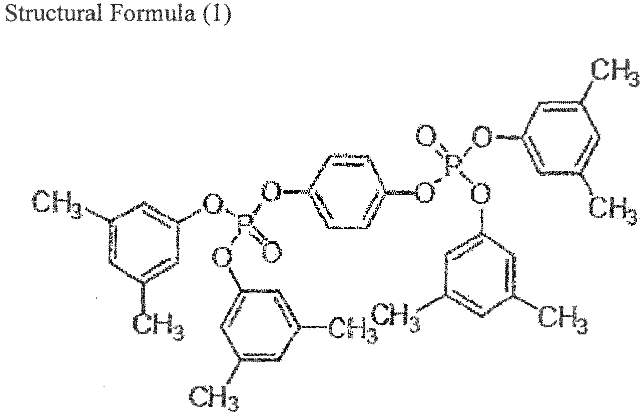

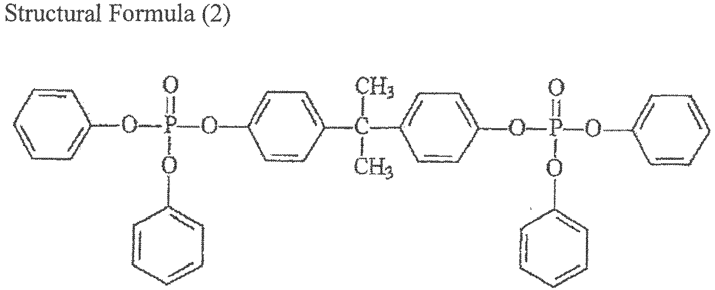

### ● Phosphazene compound:

Examples of the phosphazene compound include cyclophosphazene compounds having a cyclic [-P(OR)₂=N-]ₙ structure and polyphosphazene compounds having a chain [-P(OR)₂=N-]ₘ structure.

Here, R represents an alkyl group, an aryl group, or an alkylaryl group. Each of n and m represents an integer of 3 or more and 20 or less. In addition, two Rs may be the same as or different from each other.

Examples of the alkyl group represented by R include an alkyl group having a carbon number of 1 or more and 18 or less. Specifically, examples thereof include a methyl group, an ethyl group, a propyl group, a butyl group, and an octyl group.

Examples of the aryl group represented by R include a phenyl group and a naphthyl group.

Examples of the alkylaryl group represented by R include an aryl group in which an alkyl moiety thereof is substituted with an alkyl group having a carbon number of 1 or more and 18 or less. Specifically, examples thereof include alkylaryl groups such as a methylphenyl group, an ethylphenyl group, a propylphenyl group, a butylphenyl group, an octylphenyl group, a dimethylphenyl group, a diethylphenyl group, and an ethylmethylphenyl group.

Incidentally, in the alkyl group and the alkylaryl group represented by R, the alkyl moiety thereof may be either linear or branched.

Other than these, examples of the phosphazene compound include phosphazene compounds having a -P=N- bond in a molecule thereof, and a cyclic phenoxyphosphazene, a chain phenoxyphosphazene, phenoxyphosphazene, and a crosslinked phenoxyphosphazene are used. Above all, a cyclic phenoxyphosphazene or the like is desirable from the viewpoint of wet heat resistance.

The phosphazene compound may be either a synthetic product or a commercially available product. Specifically, examples of commercially available products of the phosphazene compound include commercially available products of Fushimi Pharmaceutical Co., Ltd. (for example, FP-110, FP-200, etc.); and commercially available products of Otsuka Chemical Co., Ltd. (for example, SPS-100, SPH-100, etc.).

### ● Content of specified flame retardant:

The specified flame retardant is preferably contained in an amount of 5 % by mass or more and 40 % by mass or less (desirably 10 % by mass or more and 20 % by mass or less, and more desirably 10 % by mass or more and 15 % by mass or less) relative to the whole amount of the PC resin, the ABS resin, and the PLA resin.

So far as the content of the specified flame retardant falls within the foregoing range, the resulting resin molded article is excellent in terms of heat resistance, and a bleed-out phenomenon of the specified flame retardant is suppressed.

### (Acid-modified talc)

The acid-modified talc is talc whose surface is modified with an acid.

Talc per se is, for example, an inorganic powder obtained by pulverizing a talc ore, and it is an inorganic powder of hydrated magnesium silicate [Mg₃Si₄O₁₀(OH)₂] composed mainly of about 60 % of SiO₂, about 30 % of MgO, and 4.8 % of crystal water.

On the other hand, examples of a treatment method of modifying the surface of talc with an acid include a method of undergoing the surface treatment with a saturated fatty acid (for example, stearic acid, etc.) or an unsaturated fatty acid (for example, oleic acid, linoleic acid, etc.) by means of kneading using a kneader (e.g., LABO PLASTOMILL 40C, manufactured by Toyo Seiki Seisaku-sho, Ltd.).

Incidentally, in the treatment of undergoing the acid modification, the fatty acid is preferably used in an amount of 0.1 % by mass or more and 10 % by mass or less (desirably 0.5 % by mass or more and 5 % by mass or less) relative to the talc.

The acid-modified talc is preferably contained in an amount of 1% by mass or more and 20 % by mass or less (desirably 3 % by mass or more and 15 % by mass or less, and more desirably 5 % by mass or more and 10 % by mass or less) relative to the whole amount of the PC resin, the ABS resin, and the PLA resin.

So far as the content of the acid-modified talc falls within the foregoing range, the resulting resin molded article is excellent in terms of heat resistance, and a lowering of its impact resistance is suppressed, too.

Moreover, a weight ratio of the flame retardant to the talc is preferably in the range of from 10/1 to 1/3.

### (Other additives)

If desired, the resin composition according to the present embodiment may contain well-known additives such as an impact resistance modifier, an antioxidant, a filler, and a hydrolysis inhibitor.

Incidentally, the content of each of these other additives is 5 % by mass or less relative to the whole amount of the PC resin, the ABS resin, and the PLA resin.

### (Preparation of resin composition)

The resin composition according to the present embodiment is manufactured by kneading the foregoing respective components.

This kneading is, for example, carried out using a known kneading apparatus such as a twin-screw kneading apparatus (e.g., TEM58SS, manufactured by Toshiba Machine Co., Ltd.) and a simple kneader (e.g., LABO PLASTOMILL, manufactured by Toyo Seiki Seisaku-sho, Ltd.).

### [Molded article]

The resin molded article according to the present embodiment is configured to include the resin composition according to the present embodiment as described above. However, the polylactic acid resin is included in a crystallized state.

Specifically, the resin molded article according to the present embodiment is, for example, obtained by molding the resin composition according to the present embodiment by a molding machine. Incidentally, examples of a molding method using a molding machine include injection molding, extrusion molding, blow molding, heat press molding, calendar molding, coating molding, cast molding, dipping molding, vacuum molding, and transfer molding.

Here, the injection molding may also be, for example, carried out using a commercially available apparatus such as NEX150, manufactured by Nissei Plastic Industrial Co., Ltd., NEX70000, manufactured by Nissei Plastic Industrial Co., Ltd., and SE50D, manufactured by Toshiba Machine Co., Ltd.

On that occasion, a cylinder temperature is desirably 170 °C or higher and 280 °C or less, and more desirably 180 °C or higher and 270 °C or less. In addition, a die temperature is desirably 40 °C or higher and 110 °C or less, and more desirably 50 °C or higher and 110 °C or less.

Incidentally, the resin molded article according to the present embodiment is in a state where the PLA resin is crystallized with the acid-modified talc.

This treatment of crystallizing the PLA resin may be either a treatment in which the die temperature is increased to a temperature at which the PLA resin is crystallized (a so-called in-die crystallization treatment) or a treatment in which after molding a resin molded article, heating (annealing) to a temperature at which the PLA resin is crystallized is carried out, in the course of molding.

The resin molded article according to the present embodiment is suitably used for applications such as electronic and electrical equipment, household electrical appliances, containers, and automobile interior finishing materials. More specifically, the resin molded article according to the present embodiment is useful for housings or various parts of household electrical appliances, electronic and electrical equipment, etc., wrapping films, accommodating cases of CD-ROM, DVD, etc., tablewares, food trays, beverage bottles, medicine wrapping materials, and the like. Above all, the resin molded article according to the present embodiment is suitable for parts of electronic and electrical equipment.

In particular, the majority of parts of electronic and electrical equipment has a complicated shape and is heavy in weight, and hence, mechanical strength is required. However, in accordance with the resin molded article according to the present embodiment, such a required characteristic is sufficiently satisfied.

### Examples

The invention is hereunder specifically described by reference to the following Examples, but it should not be construed that the invention is limited to these Examples. Incidentally, in the following, all "parts" and "%" are on a mass basis unless otherwise indicated.

### [Examples 1 to 15 and Comparative Examples 1 to 4]

### <Preparation of resin composition>

Raw materials composed of materials in a composition shown in Table 1 are charged in a twin-screw kneading apparatus (LABO PLASTOMILL, manufactured by Toyo Seiki Seisaku-sho, Ltd.) and kneaded at a cylinder temperature of 220 °C, thereby obtaining a resin composition (compound).

### <Preparation of resin molded article (test piece)>

Next, the obtained resin composition is used and subjected to injection molding at a molding temperature (cylinder temperature: 220 °C) using an injection molding apparatus (NEX150E, manufactured by Nissei Plastic Industrial Co., Ltd.) by any one operation of the following treatment methods A to C (also in Table 1), thereby obtaining a molded test piece provided with a gate on the both sides in the length direction (corresponding to the ISO 527 tensile test and the ISO 178 flexural test: test part of 100 mm in length, 10 mm in width, and 4 mm in thickness) and a UL test piece for V test in UL94 (length: 125 mm, width: 13 mm, thickness: 2.0 mm).

### ● A: In-die treatment (with crystallization of PLA resin):

Each of test pieces is obtained at a die temperature of 110 °C. After the die temperature is decreased to 60 °C, the respective test piece being subjected to crystallization of the PLA resin is taken out from the die.

### ● B: Annealing treatment (with crystallization of PLA resin):

Each of test pieces is obtained at a die temperature of 60 °C. After molding, the respective test piece is allowed to stand within a constant-temperature chamber at 80 °C, thereby undergoing crystallization of the PLA resin.

### ● C: Not treated (without crystallization of PLA resin):

Each of test pieces is obtained at a die temperature of 60 °C. That is, each of the test pieces is not subjected to a treatment of crystallizing the PLA resin.

### [Evaluation]

Each of the obtained molded articles (test pieces) was subjected to the following tests and evaluated. The results are shown in Table 1.

### <Crystallization of PLA resin>

For the evaluation of crystallization of the PLA resin, a differential scanning calorimeter (DSC, for example, "DSC-60", manufactured by Shimadzu Corporation) is used. When several mg of a non-crystallized PLA resin is sealed in an aluminum pan, and the temperature is decreased from 200 °C at a rate of from 5 to 20 °C/min, an exothermic peak due to crystallization is observed. A maximum value of the exothermic peak found in the vicinity of this crystallization temperature Tc is defined as Tc-max. The presence or absence of crystallization of the PLA resin of each of the test pieces is evaluated in terms of the presence or absence of the exothermic peak.

### <Heat resistance test>

The molded test piece provided with a gate on the both sides in the length direction is used, and a load warpage temperature (°C) at a load of 1.8 MPa is measured using an HDT measuring apparatus (HDT-3, manufactured by Toyo Seiki Seisaku-sho, Ltd.) in conformity with the ISO 178 flexural test. This is defmed as a heat-resistant temperature and evaluated.

### <Flame retardancy test>

The UL test piece for V test in UL94 is used, and a UL-V test was carried out by the UL-94 method. Criteria of the UL-V test are as follows.
- V-0:: The flame retardancy is the highest.
- V-1:: The flame retardancy is high next to V-0.
- V-2:: The flame retardancy is high next to V 1.
- V-Not:: The flame retardancy is inferior to V-2.

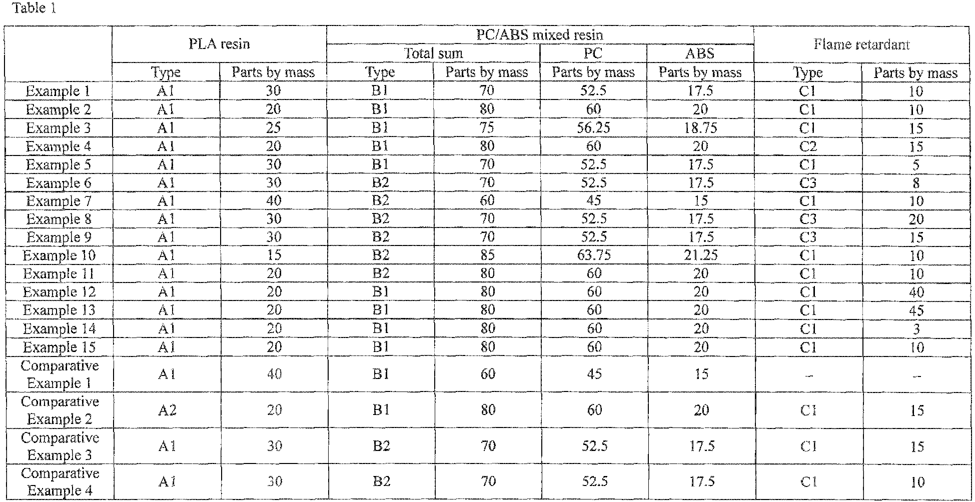

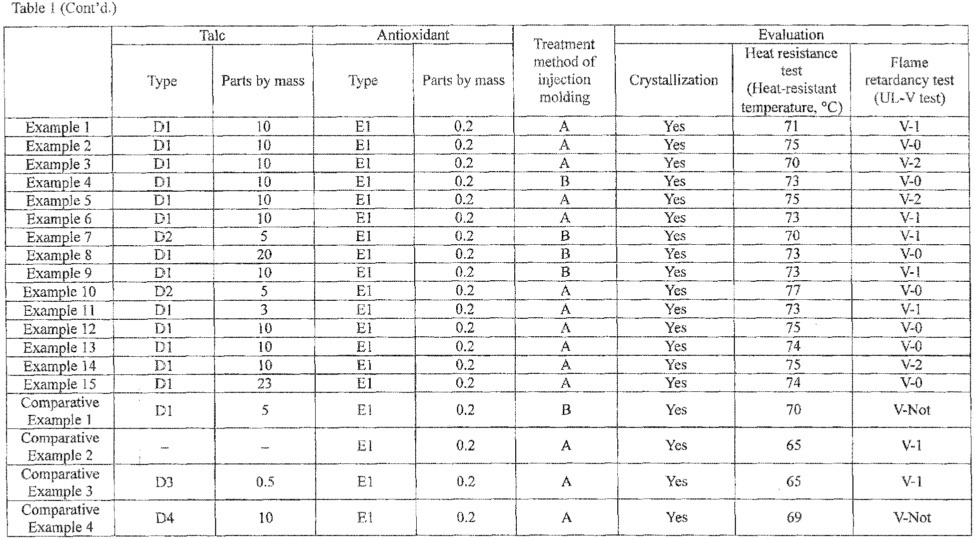

It was noted from the foregoing results that in the Examples, favorable results in both the heat resistance test and the flame retardancy test are obtained.

In Example 13 in which only the content of the flame retardant is changed relative to Example 2, though a difference from the evaluation results in Example 2 is not substantially found, the bleed-out phenomenon of C1 is found. In addition, in Example 14 in which only the content of the flame retardant is changed relative to Example 2, the flame retardancy is lowered as compared with Example 2.

In Example 11 in which only the content of talc is changed relative to Example 2, the heat resistance is slightly lowered, and the flame retardancy is lowered as compared with Example 2. In addition, in Example 14 in which only the content of talc is changed relative to Example 2, though a difference from the evaluation results in Example 2 is not substantially found, the impact resistance is lowered.

In Comparative Example 1, since the specified flame retardant is not contained, it is noted that the results of the flame retardancy test are poor. In Comparative Example 2, since the acid-modified talc is not contained, it is noted that the results of the heat resistance test and the flame retardancy test are inferior. In Comparative Examples 3 and 4, since though talc is contained, it is not the acid-modified talc, it is noted that the results of the heat resistance test and the flame retardancy test are inferior.

Incidentally, in each of Examples 2, 4, 8, and 10, 2 parts by mass of CARBODILITE LA-1 (manufactured by Nisshinbo Chemical Inc.) and 2 parts by mass of BIOADMIDE 100 (manufactured by Rhein Chemie) are added to fabricate a resin composition. A resin molded article is obtained using this resin composition and evaluated. As a result, it is confirmed that the same results are obtained.

Details of the abbreviations of the respective components shown in Table 1 are as follows.

### - PLA resin -

- A1: 3001D (manufactured by Nature Works LLC), weight average molecular weight: 150,000, not blended with a nucleating agent
- A2: TERRAMAC TE7000, manufactured by Unitika Ltd., weight average molecular weight: 100,000, a nucleating agent-incorporated PLA resin

### - PC/ABS mixed resin -

- B1: PANLITE TN7300 (manufactured by Teijin Chemicals Ltd.), PC resin/ABS resin = 3/1 (mass ratio)
- B2: Pulverized material obtained by pulverizing each test piece fabricated using "PANLITE TN7300" (manufactured by Teijin Chemicals Ltd.) of B1 and repeating a step of again fabricating each test piece by using the pulverized material as a raw material five times, PC resin/ABS resin = 3/1 (mass ratio)

### - Flame retardant -

- C1: PX200 (manufactured by Daihachi Chemical Industry Co., Ltd.), a condensed phosphate
- C2: CR741 (manufactured by Daihachi Chemical Industry Co., Ltd.), a condensed phosphate
- C3: RABITLE FP-110 (manufactured by Fushimi Pharmaceutical Co., Ltd., a phosphazene compound

### - Talc -

- D1: Acid-modified talc

(Production method: Acid-modified talc fabricated by charging maleic anhydride and talc in a kneader (LABO PLASTOMILL 40C, manufactured by Toyo Seiki Seisaku-sho, Ltd.) and kneading them at a temperature of 80 °C for 3 minutes)
- D2: Acid-modified talc

(Production method: Acid-modified talc fabricated by charging oleic acid and talc in a kneader (LABO PLASTOMILL 40C, manufactured by Toyo Seiki Seisaku-sho, Ltd.) and kneading them at a temperature of 60 °C for 5 minutes)
- D3: ECOPROMOTE (manufactured by Nissan Chemical Industries, Ltd.), non-acid-modified talc
- D4: P3 TALC (manufactured by Nippon Talc Co., Ltd.), non-acid-modified talc

### - Antioxidant -

- E1: IRGANOX 245 (manufactured by BASF SE)

## Claims

1. A resin composition comprising:
a polycarbonate resin,
an acrylonitrile/butadiene/styrene resin,
a polylactic acid resin,
at least one flame retardant selected from a condensed phosphate and a phosphazene compound, and
talc modified with an acid.

2. The resin composition according to claim 1,
wherein a weight ratio of the flame retardant to the talc is in the range of from 10/1 to 1/3.

3. The resin composition according to claim 1,
wherein a weight ratio of the acrylonitrile/butadiene/styrene resin to the polylactic acid resin is in the range of from 1/3 to 4/1.

4. The resin composition according to claim 1,
wherein the polycarbonate resin is contained in an amount of 50 % by mass or more and 80 % by mass or less,
the acrylonitrile/butadiene/styrene resin is contained in an amount of 10 % by mass or more and 30 % by mass or less, and
the polylactic acid resin is contained in an amount of 10 % by mass or more and 40 % by mass or less,
in the whole amount of the polycarbonate resin, the acrylonitrile/butadiene/styrene resin, and the polylactic acid resin; and
the flame retardant is contained in an amount of 5 % by mass or more and 40 % by mass or less, and
the talc is contained in an amount of 1 % by mass or more and 20 % by mass or less,
relative to the whole amount of the polycarbonate resin, the acrylonitrile/butadiene/styrene resin, and the polylactic acid resin.

5. The resin composition according to claim 1,
wherein a weight average molecular weight of the polycarbonate resin is in the range of from 5,000 to 30,000.

6. The resin composition according to claim 4,
wherein the polycarbonate resin is contained in an amount of 55 % by mass or more and 75 % by mass or less.

7. The resin composition according to claim 1,
wherein a mass ratio of the components of the acrylonitrile/butadiene/styrene resin is in the range of from 20/5/40 to 30/40/70.

8. The resin composition according to claim 4,
wherein the flame retardant is contained in an amount of from 10 % by mass to 20 % by mass.

9. A resin molded article comprising:
a polycarbonate resin,
an acrylonitrile/butadiene/styrene resin,
a polylactic acid resin which is crystallized,
at least one flame retardant selected from a condensed phosphate and a phosphazene compound, and
talc modified with an acid.

10. The resin molded article according to claim 9,
wherein a weight ratio of the flame retardant to the talc is in the range of from 10/1 to 1/3.

11. The resin molded article according to claim 9,
wherein a weight ratio of the acrylonitrile/butadiene/styrene resin to the polylactic acid resin is in the range of from 1/3 to 4/1.

12. The resin molded article according to claim 9,
wherein the polycarbonate resin is contained in an amount of 50 % by mass or more and 80 % by mass or less,
the acrylonitrile/butadiene/styrene resin is contained in an amount of 10 % by mass or more and 30 % by mass or less, and
the polylactic acid resin is contained in an amount of 10 % by mass or more and 40 % by mass or less,
in the whole amount of the polycarbonate resin, the acrylonitrile/butadiene/styrene resin, and the polylactic acid resin; and
the flame retardant is contained in an amount of 5 % by mass or more and 40 % by mass or less, and
the talc is contained in an amount of 1 % by mass or more and 20 % by mass or less,
relative to the whole amount of the polycarbonate resin, the acrylonitrile/butadiene/styrene resin, and the polylactic acid resin.

13. The resin molded article according to claim 9,
wherein a weight average molecular weight of the polycarbonate resin is in the range of from 5,000 to 30,000.

14. The resin molded article according to claim 12,
wherein the polycarbonate resin is contained in an amount of 55 % by mass or more and 75 % by mass or less.

15. The resin molded article according to claim 9,
wherein a mass ratio of the components of the acrylonitrile/butadiene/styrene resin is in the range of from 20/5/40 to 30/40/70.

16. The resin molded article according to claim 12,
wherein the flame retardant is contained in an amount of from 10 % by mass to 20 % by mass.
